# EUROPÄISCHE PATENTANMELDUNG

(11) **EP 1 391 663 A1**
(43) Veröffentlichungstag der Anmeldung: **25.02.2004**
(21) Anmeldenummer: 03018355.2
(22) Anmeldetag: 13.08.2003
(51) Int. Cl.: F24H 9/00

(54) **Vorrichtung zum Erwärmen von Wasser**

(30) Priorität: 19.08.2002 AT 12392002
(71) Anmelder: Vaillant GmbH, 42859 Remscheid (DE)
(72) Erfinder: Peotta, Paolo, 12037 Saluzzo (CN) (IT)
(74) Vertreter: Hocker, Thomas

(57) **Zusammenfassung**

Bei einem Heizgerät, das einen ersten Wärmetauscher sowie eine Vorlaufleitung und eine Rücklaufleitung umfaßt, werden die Vorlaufleitung (1) und die Rücklaufleitung (2) außerhalb des Gerätes durch einen zweiten Wärmeaustauscher (3) miteinander verbunden, um die Rücklauftemperatur anzuheben, wobei der zweite Wärmetauscher aus einem koaxialen Leitungssystem besteht und die Vorlaufleitung und die Rücklaufleitung im Gegenstrom durchströmt werden.

## Beschreibung

Die Erfindung bezieht sich auf eine Vorrichtung zum Erwärmen von Wasser.

Bei Vorrichtungen zum kontinuierlichen Erwärmen von Wasser wird Wasser, das in einer Rücklaufleitung der Vorrichtung zugeführt wird, in einem Wärmeaustauscher erhitzt und anschließend in einer Vorlaufleitung abgeführt. Handelt es sich bei der Vorrichtung um eine brennstoffbetriebene Heizungsanlage, so wird von einem Brenner Brenngas (z.B. Erdgas, Flüssiggas, o.ä.), Öl oder ein anderer Brennstoff verbrannt und das Abgas in oben genanntem Wärmeaustauscher abgekühlt, wodurch das Abgas Energie an das Wasser abgibt.

Hierbei kann das Abgas des Brenners bis nahezu Rücklauftemperatur abgekühlt werden. Unterschreitet das Abgas dabei die Taupunktstemperatur, so kondensiert Wasserdampf aus. Hierbei wird zwar Kondensationsenergie frei, was den thermischen Wirkungsgrad der Heizungsanlage erhöht, doch ist dies zum Beispiel wegen möglicher Korrosion des Wärmeaustauschers und / oder Kaminversottung nicht immer erwünscht, zumal das Kondensat nicht ph -neutral ist.

Der Taupunkt eines vollvormischenden, erdgasbetriebenen Brenners liegt üblicherweise zwischen 55 und 60°C. Typische Rücklauftemperaturen eines Heizkreislaufs liegen unterhalb dieser Temperatur, so dass prinzipiell die Gefahr der Kondensation in der Heizungsanlage, insbesondere bei Gegenstromwärmeaustauschern, besteht. Bei Gegenstromwärmeaustauschern in Heizungsanlagen strömen Abgas und Wasser auf ihren jeweiligen Seiten des Wärmeaustauschers einander entgegen, wodurch - stets von Wärmeaustauscherflächen getrennt - das durch den Rücklauf einströmende Wasser auf abgekühltes Abgas trifft und das im Wärmeaustauscher erwärmte Wasser beim Austritt aus dem Wärmeaustauscher auf das heiße in den Wärmeaustauscher einströmende Abgas trifft. Hierduch wird ein optimaler Wärmeaustausch bei kompakter Bauweise erreicht.

Gemäß dem Stand der Technik wird Kondensation bei Heizkesseln dadurch vermeiden, dass Wasser und Abgas im Gleichstrom strömen, wodurch das Abgas nicht bis auf Rücklauftemperatur abgekühlt werden kann. Gerade bei Volllast hat diese Bauweise jedoch relativ hohe Abgastemperaturen zur Folge. Eine andere Lösung gemäß dem Stand der Technik besteht darin, den Wärmeaustausch zum Beispiel durch Begrenzung der Wärmeaustauscherfläche oder Minderung des Wärmeaustauschkoeffizienten (z.B. Vermeidung von Wirbeln) zu begrenzen. Auch hierbei lassen sich bei Volllast relativ hohe Abgastemperaturen nicht vermeiden.

Aufgabe der Erfindung ist daher, Kondensation bei einer Vorrichtung zum Erwärmen von Wasser zu vermeiden ohne dabei den Wirkungsgrad oder den baulichen Aufwand negativ zu beeinflussen.

Erfindungsgemäß wird dies bei einer Vorrichtung zum Erwärmen von Wasser gemäß dem unabhängigen Anspruch 1 dadurch erreicht, dass die Temperatur des Rücklaufwassers durch Wärmeaustausch mit dem Vorlaufwasser in einem Wärmeaustauscher - der nicht dem Wärmeaustauscher entspricht, in welchem Energie der Wärmequelle (z.B. Brenner bzw. Abgas des Brenners) auf das Wasser übertragen wird - angehoben wird. Durch diesen Wärmeaustausch in dem gesonderten Wärmeaustauscher wird die Rücklauftemperatur angehoben und die Gefahr der Taupunktsunterschreitung sinkt. Gleichzeitig ist damit keine Wirkungsgradeinbuße verbunden, da die Wärme, die dem Vorlauf entzogen wird, auf den Rücklauf übergeht, also im System bleibt.

Gemäß den Merkmalen des Anspruchs 2 ergibt sich der Vorteil, dass der gesonderte Wärmeaustauscher auch nachträglich an eine bestehende Anlage angeschlossen werden kann.

Gemäß den Merkmalen des Anspruchs 3 ergibt sich der Vorteil, dass der zusätzliche Wärmeaustauscher und die sonstige Anlage eine kompakte Einheit bilden können.

Gemäß den Merkmalen des Anspruchs 4 ergibt sich der Vorteil, dass die zwei Wärmeaustauscher für die Übertragung von Wärme der Wärmequelle auf das Wasser und der Übertragung von Wärme vom Vorlauf auf den Rücklauf zu einem Wärmeaustauscher zusammengefaßt werden können. Dies stellt keinen Gegensatz zur Argumentation zu Anspruch 1 dar, da nach wie vor gesonderte Wärmetauscherflächen zwischen der Wärmequelle und dem Wasserweg sowie zwischen dem Vorlauf und dem Rücklauf bestehen. Jedoch ist es möglich, dies in einer baulichen Einheit zu integrieren.

Gemäß den Merkmalen des Anspruchs 5 wird eine vorteilhafte Variante des Wärmeaustauschers zwischen Vor- und Rücklauf geschützt.

Die Merkmale der Ansprüche 6 und 7 beschreiben vorteilhafte Möglichkeiten zur Gestaltung des Wärmeaustauschers gemäß Anspruch 5.

Gemäß den Merkmalen des Anspruchs 8 kann auf kleinem Bauraum besonders viel Wärme übertragen werden. Die Vorteile eines Gegenstromwärmeaustauschers sind bereits zu Beginn der Beschreibung genannt.

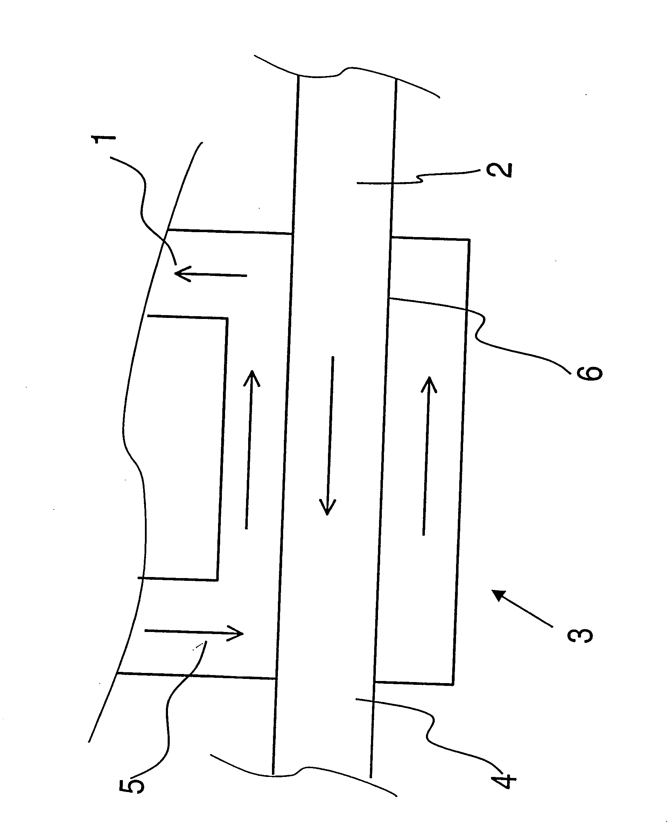

Die Erfindung wird nun anhand der Zeichnung näher erläutert. Die Fig. zeigt einen Wärmeaustauscher 3 für den Austausch von thermischer Energie von der Vorlaufleitung 1 auf die Rücklaufleitung 2. Wasser strömt in der Vorlaufleitung 1 und Rücklaufleitung 2 im Gegenstrom. Über die gemeinsame Wärmeaustauscherfläche 6 strömt Wärme von der Vorlaufleitung 1 auf die Rücklaufleitung 2, so dass das Wasser, welches durch die Rücklaufleitung 2 in den Wärmeaustauscher 3 einströmt, erhitzt durch die Eintrittsleitung 4 in den nicht dargestellten Heizungswärmeaustauscher abströmt. Das Wasser wird im Heizungswärmeaustauscher durch die Abgase eines Brenners erhitzt und gelangen durch die Austrittsleitung 5 des nicht dargestellten Heizungswärmeaustauschers in den Wärmeaustauscher 3, wo das Wasser Wärme an die Rücklaufleitung 2 abgibt und schließlich über die Vorlaufleitung 1 abströmt.

## Patentansprüche

1. Vorrichtung zum Erwärmen von Wasser, vorzugsweise Heizungsanlage, mit einer Vorlaufleitung (1) und einer Rücklaufleitung (2), **dadurch gekennzeichnet, dass** die Vorlaufleitung (1) und die Rücklaufleitung (2) durch einen Wärmeaustauscher (3) verbunden sind.

2. Vorrichtung zum Erwärmen von Wasser gemäß Anspruch 1, **dadurch gekennzeichnet, dass** der Wärmeaustauscher (3) sich außerhalb des Wärmeaustauschers zur Übertragung von Wärme von der Wärmequelle auf das Wasser befindet.

3. Vorrichtung zum Erwärmen von Wasser gemäß Anspruch 1 oder 2, **dadurch gekennzeichnet, dass** der Wärmeaustauscher (3) sich am Eingang beziehungsweise Ausgang des Wärmeaustauschers zur Übertragung von Wärme von der Wärmequelle auf das Wasser befindet.

4. Vorrichtung zum Erwärmen von Wasser gemäß Anspruch 3, **dadurch gekennzeichnet, dass** der Wärmeaustauscher (3) für die Verbindung der Vorlaufleitung (1) und der Rücklaufleitung (2) mit dem Wärmeaustauscher zur Übertragung von Energie der Wärmequelle auf das Wasser eine Einheit bilden.

5. Vorrichtung zum Erwärmen von Wasser gemäß einem der Ansprüche 1 bis 4, **dadurch gekennzeichnet, dass** der Wärmeaustauscher (3) aus einem koaxialen Leitungssystem besteht.

6. Vorrichtung zum Erwärmen von Wasser gemäß Anspruch 5, **dadurch gekennzeichnet, dass** innerhalb des Wärmeaustauschers (3) die Rücklaufleitung (2) innerhalb der Vorlaufleitung (1) verläuft.

7. Vorrichtung zum Erwärmen von Wasser gemäß Anspruch 5, **dadurch gekennzeichnet, dass** innerhalb des Wärmeaustauschers (3) die Vorlaufleitung (1) innerhalb der Rücklaufleitung (2) verläuft.

8. Vorrichtung zum Erwärmen von Wasser gemäß einem der Ansprüche 1 bis 7, **dadurch gekennzeichnet, dass** in dem Wärmeaustauscher (3) die Vorlaufleitung (1) und die Rücklaufleitung (2) im Gegenstrom durchströmt werden.
